(19) Europäisches Patentamt
European Patent Office
Office européen des brevets

(11) EP 0 104 899 B2

(12) NEW EUROPEAN PATENT SPECIFICATION

(45) Date of publication and mention
of the opposition decision:
**04.11.1998 Bulletin 1998/45**

(51) Int Cl.6: **C08F 279/04**, C08F 285/00
// C08L55/02,(C08F285/00,
212:08, 220:44)

(45) Mention of the grant of the patent:
**08.05.1991 Bulletin 1991/19**

(21) Application number: 83305648.4

(22) Date of filing: **22.09.1983**

(54) **Process for producing thermoplastic resins and compositions containing the same**

Verfahren zur Herstellung von thermoplastischen Harzen und Zusammensetzungen daraus

Procédé de production de résines thermoplastiques et compositions les contenant

(84) Designated Contracting States:
**DE GB NL**

(30) Priority: **22.09.1982 JP 163958/82**

(43) Date of publication of application:
**04.04.1984 Bulletin 1984/14**

(73) Proprietor: **JAPAN SYNTHETIC RUBBER CO.,
LTD.
Tokyo 104 (JP)**

(72) Inventors:
• **Abe, Mitsuo
Yokkaichi-shi (JP)**
• **Atomori, Seiichi
Yokkaichi-shi (JP)**
• **Tsutsumi, Tadahiko
Suzuka-shi (JP)**

• **Noro, Masahiko
Yokkaichi-shi (JP)**

(74) Representative: **Lamb, Martin John Carstairs et al
MARKS & CLERK,
57-60 Lincoln's Inn Fields
London WC2A 3LS (GB)**

(56) References cited:
| | |
|---|---|
| EP-A- 81 761 | FR-A- 2 246 594 |
| GB-A- 2 044 276 | GB-A- 2 044 782 |
| US-A- 3 367 995 | US-A- 3 627 855 |

Remarks:
The file contains technical information submitted after the application was filed and not included in this specification

EP 0 104 899 B2

## Description

The present invention relates to a process for producing a novel thermoplastic resin which is capable of having good chemical resistance, excellent impact resistance and excellent processability.

Polymers composed of a rubbery polymer onto which are grafted an alkenyl aromatic compound and an unsaturated nitrile (for example ABS resins) have been widely used in many fields, for example in electrical goods, in interior and exterior trim of cars, in office appliances and in many other articles, since these polymers have excellent mechanical properties and moulding processability.

Moreover, these polymers are widely used where chemical resistance is required, although they are often coated in order to improve their appearance or to compensate for their low weather resistance when they are used outdoors. In particular, such polymers are used together with urethane films as structural materials for constructing certain internal parts of refrigerators. However, various problems have recently occurred in these uses, which means that higher chemical resistance of such polymers is now required.

In general. ABS resins and similar polymers have good adhesion to paints and affinity to thinners: accordingly, coatings can easily be formed on such resins. As a result of this, moulded articles of ABS resins are often coated with urethane paints or with acrylic paints.

Urethane paints have superior chemical resistance to acrylic paints. However, if the coating film of urethane has not completely solidified, chemical resistance is inadequate; for example, when a defective portion of a coated product is coated again, the original coating film swells and peels (hereinafter referred to as "lifting"), which changes the surface of the coating film and reduces the commercial value of the product. To counter this, an amine catalyst is often added to promote solidification of the paint, but this shortens the life of the urethane coating and increases its cost. Furthermore, the coating conditions are changed. However, the real problem is that it restricts conditions of use and workability of the product.

ABS and similar resins are often used as interior materials for the box bodies of refrigerators. In this case, a urethane foam insulator is placed between the inner box and the outer housing, as a result of which the inner box comes into contact with the starting materials used to produce the polyurethane foam, specifically an isocyanate compound, a polyol compound and a fluorocarbon foaming agent, such as those sold under the trade mark Freon. These starting materials chemically erode the resin, thereby greatly decreasing its strength. Accordingly, a fluorocarbon gas-resistant film is often provided on one surface of the inner box (on the side contacting the fluorocarbon gas) to prevent erosion by this gas. However, this not only complicates the production of the refrigerator box body, but it also has the effect of separating the urethane foam from the face of the box body, with the result that the structure of the box body does not become integrated and the inner box is insufficiently fixed.

EP-A-81761 relates to a thermoplastic composition containing

(i) polymer particles constituted by a core of polyacryl acrylate (A) and a shell of a copolymer (B) of a vinylaromatic monomer $b_1$ and an ethylenically unsaturated monomer $b_2$,
(ii) a copolymer (C) prepared from one or more vinylaromatic(s) monomer $c_1$ and from one or more ethylenically unsaturated monomers(s) $c_2$, and
(iii) optionally usual additives.

The shell (B) is prepared in two steps: in the first step monomer $b_1$ is used in an amount of 20 to 70 wt% of the total amount of the monomers $b_1 + b_2$, and in the second step a mixture of the two monomers $b_1$ and $b_2$ in a weight ratio $b_1/b_2$ of 90/10 to 60/40 is used in amount of 30 to 80 wt% of the total amount of the monomers $b_1 + b_2$.

We have now discovered a process for preparing a thermoplastic resin which is capable of having excellent resistance to lifting and excellent resistance to attack by fluorocarbon gas foaming agents (hereinafter referred to as "special chemical resistance"). The resin can also have good impact resistance and processability. This is achieved by a stepwise graft copolymerisation of a mixture of an unsaturated nitrile compound and an alkenyl aromatic compound in the presence of a rubbery polymer latex, the proportion of unsaturated nitrile compound being varied between the steps.

The present invention provides a process for producing a thermoplastic resin by polymerising a monomer mixture of an ethylenically unsaturated nitrile monomer and an alkenyl aromatic monomer in the presence of a rubbery polymer latex, selected from the group consisting of polybutadiene, acrylonitrile-butadiene copolymers, styrene-butadiene copolymers, isoprene rubber, chloroprene rubber, and ethylene-propylene-diene rubbers, characterised in that (i) the monomer mixture essentially consists, as the only copolymerisable monomers, of the two said monomers and (ii) the polymerisation is effected in at least two steps:

(a) a first step or steps in which in total from 30 to 70% by weight of the whole monomer mixture is polymerised, the unsaturated nitrile monomer content of the mixture in this step or in each of these steps being from 0 to 18% by weight; and

(b) a subsequent step or steps in which the remainder of the monomer mixture is polymerised, the overall unsaturated nitrile monomer content of the mixtures in this step or steps being from 35 to 90% by weight, and the content of unsaturated nitrile monomer units in the polymer part formed by polymerisation in steps (a) and (b) being from 28 to 38% weight.

US-A-3367995 describes a composition, differing in detail of composition from that defined in the present application. It is concerned with oil resistance properties. Such properties are different from resistance to fluorocarbon gases, since the size, shape and surface interaction of oil molecules (as distinct from fluorocarbon gas molecules) are totally different.

GB-A-2044782 states that nitrile resins with relatively high unsaturated nitrile content excel in gas barrier properties and chemical resistance. It is not however a teaching of the ranges now claimed nor of the particular resistance (to fluorocarbon gas) achieved thereby.

GB-A-1482143 requires additional starting monomers (non-conjugated diolefin and (meth)acrylic ester) and uses the composition in packaging applications. The present invention sets out to use the resin in molded products of specific chemical resistance to freon gas i. e. fluorocarbons, on which topic the prior an is silent.

The rubbery polymers or a mixture of two or more thereof may be used. The latex may have been prepared by a conventional emulsion polymerisation method or by re-emulsification of one or more of these polymers which had previously been prepared.

The monomers used for producing the graft copolymer of the present invention are an unsaturated nitrile monomer and an alkenyl aromatic monomer. The unsaturated nitrile is preferably a lover alkenyl nitrile, such as acrylonitrile or methacrylonitrile.

The alkenyl aromatic monomer is preferably an alkenyl aromatic hydrocarbon monomer, optionally having one or more substituents (preferably halogen atoms and/or alkoxy groups) on the aromatic moiety. Examples of such alkenyl aromatic monomers include styrene. α-methylstyrene, p-methylstyrene, o-methylstyrene, m-methylstyrene, chlorostyrene, bromostyrene, vinylnaphthalene and alkoxystyrenes. A single one of these alkenyl aromatic monomers may be used or there may be used a mixture of any two or more thereof; similarly, a single unsaturated nitrile or a mixture of too or more thereof may be used.

The process of the invention may be carried out by any conventional technique applicable to this type of graft copolymerisation reaction, for example by a conventional emulsion polymerisation process, i.e. by emulsion graft-polymerising a monomer mixture of the unsaturated nitrile monomer and the alkenyl aromatic monomer in the presence of the aforesaid rubbery polymer latex.

In the process of the invention, it is preferred to employ from 95 to 40 parts by weight, more preferably from 80 to 40 parts by weight, of the monomer mixture (comprising the unsaturated nitrile monomer and the alkenyl aromatic monomer) and from 5 to 60 parts by weight (as solids), more preferably from 20 to 60 parts by weight (as solids), of the rubbery polymer latex, the total of the rubbery polymer latex and the monomer mixture being 100 parts by weight. If the amount of rubbery polymer is less than 5 parts by weight, the impact resistance of the resulting thermoplastic resin is inadequate; on the other hand, if the amount of rubbery polymer exceeds 60 parts by weight, recovery of the resin as a powder becomes difficult. Moreover, outside the range of from 5 to 60 parts by weight of rubbery polymer latex, it is difficult to achieve good physical properties and an appropriate balance of fluidity and impact resistance in the resulting graft copolymer and such graft copolymers are difficult to knead uniformly when they are blended with other thermoplastic resins or with acrylonitrile-styrene copolymers (AS resins).

The whole monomer mixture employed in the process of the present invention preferably consists of from 25 to 40% by weight of the unsaturated nitrile monomer and from 75 to 60% by weight of the alkenyl aromatic monomer (including any other copolymerisable monomer that may have been used in place of part of the alkenyl aromatic monomer). In order to enhance the impact resistance and solvent resistance of the eventual graft copolymer, the amount of unsaturated nitrile monomer is preferably at least 25% by weight; however, if this amount exceeds 40% by weight, other defects appear, which may not always be acceptable, for example processability and impact resistance deteriorate and discolouration tends to occur during high temperature moulding.

In order to impart special chemical resistance to the graft copolymer, it is important that the monomer mixture employed in the first step (a) should have an unsaturated nitrile monomer content of from 0 to 18% by weight, and where there is more than one step (a), the unsaturated nitrile content of the monomer mixture in each such step should be within this range. Moreover, the amount of monomer mixture polymerised in step (a) should be from 30 to 70% by weight, preferably from 30 to 60% by weight, of the whole monomer mixture. In the second and subsequent steps (b), the remainder of the monomer mixture, having an unsaturated nitrile monomer content [averaged over all of steps (b), where there is more than one such step] of from 35 to 90% by weight, preferably from 40 to 70% by weight, is polymerised.

When the unsaturated nitrile monomer content in the monomer mixture employed in step (a) exceeds 18% by weight, the special chemical resistance deteriorates. When the amount of monomer mixture employed in this step is less than 30% by weight of the whole monomer mixture, the special chemical resistance will not generally be improved; on the other hand, if the amount is too much, the stability of the latex during polymerisation is reduced.

If the unsaturated nitrile monomer content in the monomer mixture employed in the second and subsequent steps (b), when the remainder of the monomer mixture is polymerised, is less than 35% by weight, the special chemical resistance deteriorates; where this content is too high, polymerisation conversion is reduced and the fluidity deteriorates. If the resulting graft copolymer is blended with an AS resin having a high unsaturated nitrile monomer content in order to compensate for the reduced chemical resistance, the two polymers have poor compatibility and it is difficult to knead them uniformly.

Polymerisation in steps (a) and (b) of the graft copolymerisation reaction of the invention may be carried out in a conventional manner by adding monomers, initiators and the like all at once or by adding them in portions or continuously. The partition of the monomers for portion-wise addition is not critical, provided that the unsaturated nitrile monomer content of the monomer composition falls within the ranges prescribed for the present invention.

Provided that the unsaturated nitrile monomer content in the part of the polymer formed by polymerisation of the monomer mixture in the resulting thermoplastic resin is in the range from 28 to 38% by weight, a good balance of physical properties, including special chemical resistance, impact resistance and processability, can be achieved.

Any emulsifier which is capable of use in conventional emulsion polymerisation reactions may be employed in the process of the present invention. Examples of such emulsifiers include alkali metal salts of fatty acids, alkali metal salts of aliphatic sulphates and disproportionated alkali metal rosinates.

A wide range of radical polymerisation initiators may be employed in the process of the invention, including: water-soluble initiators, such as potassium persulphate or ammonium persulphate; oil-soluble initiators consisting of an organic peroxide alone, such as cumene hydroperoxide, benzoyl peroxide, lauroyl peroxide, paramenthane peroxide or t-butyl hydroperoxide; or a redox system initiator consisting of one or more of the aforementioned organic peroxides in association with a reducing agent, particularly an iron salt such as ferrous sulphate. In the latter case, the iron salt may also contain an auxiliary reducing agent or a chelating agent, as in the sugar-containing pyrophosphoric acid recipe or the sulphoxylate recipe. Furthermore, a polymerisation regulator may be used, if desired, for example a mercaptan, such as octyl mercaptan, dodecyl mercaptan, t-dodecyl mercaptan or mercaptoethanol; a terpene or terpene mixture, for example a mixture consisting of dipentene, terpinolene, $\gamma$-terpinene and a small amount of other cyclic terpenes; or a halogen compound.

The thermoplastic resin obtained by the process of the invention may be employed by itself or it may be mixed with other resins, particularly other impact-resistant thermoplastic resins, including rubber-reinforced thermoplastic resins, such as ABS resins, AES resins (i.e. a graft copolymer of acrylonitrile and styrene on an ethylene-propylene rubber or on an ethylene-propylene-diene rubber) or AAS resins (i.e. a graft copolymer of acrylonitrile and styrene on an acrylic rubber), in order to improve the performance of the product. Moreover, the thermoplastic resin of the invention may be employed in admixture with various other resins, such as polyphenylene ether resins, polyoxymethylene resins, polyamides or polyesters. The thermoplastic resin obtained by the process of the invention has particularly good compatibility with polyphenylene ether resins and a blend composition of the two has excellent heat resistance, impact strength, surface gloss of moulded articles, solvent resistance and ability to be coated. The thermoplastic resin of the invention will also blend well with polycarbonate resins and the resulting blend has excellent ability to be coated.

Moreover, the thermoplastic resin of the invention may also be employed in admixture with copolymers of at least one alkenyl aromatic monomer, at least one unsaturated nitrile monomer and optionally at least one unsaturated ester monomer, for example commercially available AS resins.

Where a thermoplastic resin produced by a process of the invention is to be blended with another resin or copolymer, the thermoplastic resin having a high content of rubbery polymer and produced by the process of the invention is preferably blended with the other resin or copolymer, in such proportions that the content of the rubbery polymer in the final resin composition is within the range of from 5 to 40% by weight, in order to achieve good results. In order to improve the special chemical resistance, processability and impact resistance of the final resin composition, it is desirable that the AS resin to be blended has a relatively high content of unsaturated nitrile monomer, for example 30% by weight or more, and an intrinsic viscosity of 0.35 dl/g or more, as measured in methyl ethyl ketone at 30° C.

It is also possible to incorporate into the thermoplastic resin of the invention or into any composition containing the same a variety of conventional additives in appropriate amounts, in particular aging retardents, such as hindered phenols, or lubricants, such as metal salts of fatty acids.

Since the thermoplastic resin of the invention has good special chemical resistance, impact resistance and processability, it has a high value in industry particularly for use as materials for coating and as interior trims for refrigerators.

The invention is further illustrated by the following Examples, in which parts and percentages are by weight.

EXAMPLE 1

(a) Production of Latex A

Butadiene was subjected to emulsion polymerisation using a fatty acid soap as emulsifier, a redox system initiator composed essentially of cumene hydroperoxide and ferrous sulphate, and t-dodecyl mercaptan as a chain transfer agent. The polymerisation system was forcibly stirred during polymerisation, giving a polybutadiene latex (hereinafter referred to as latex A) containing enlarged particles. The polymerisation time was 60 hours and the conversion was 60%. The average gel content of latex A was 78% and the weight fraction of particles having a diameter of 310 nm or more (as measured by the sodium alginate method) was 60%.

(b) Production of graft polymer

Into a reactor equipped with a stirrer, a heating jacket, a reflux condenser, a thermometer, an inlet for nitrogen gas and means for continuously adding monomer emulsion and polymerisation initiators were charged the following substances:

| | |
|---|---|
| Latex A (as solids) | 16 parts |
| Polybutadiene latex (as solids) (Product of Japan Synthetic Rubber Co. Ltd., JSR 0700) | 24 parts |
| Styrene | 18 parts |
| Acrylonitrile | 2 parts |
| Disproportionated potassium rosinate | 1.0 part |
| Terpinolene | 0.02 part |
| Cumene hydroperoxide | 0.10 part |
| Dextrose | 0.35 part |
| Sodium pyrophosphate | 0.30 part |
| Ferrous sulphate | 0.01 part |
| Ion exchanged water | 150 parts |

The air in the reactor was then replaced by nitrogen and the resulting mixture was heated and subjected to graft polymerisation at 70° C for 1 hour.

The following mixture was then added continuously to the reactor over a period of 2 hours:

| | |
|---|---|
| Styrene | 22 parts |
| Acrylonitrile | 18 parts |
| Cumene hydroperoxide | 0.20 part |
| Terpinolene | 0.20 part |

After the addition was complete, the reaction was continued, with stirring, at 70° C for 1 hour. To the resulting graft polymer latex was then added 1.0 part of 2,6-di-t-butyl-p-cresol, as an aging retardant, followed by sulphuric acid (2 parts per 100 parts of polymer) to coagulate the latex. The coagulated product was separated, washed, dehydrated and dried, to give a graft polymer. The acrylonitrile content of the polymer (determined by Coleman analysis, as are all acrylonitrile contents hereafter) in the part of the polymer formed by polymerisation was 31%. An AS resin (whose acrylonitrile content was 30% and whose intrinsic viscosity, as measured in methyl ethyl ketone at 30° C, was 0.45 dl/g) was mixed with this graft polymer, to adjust the rubber content to 24%. 2 parts (per 100 of resin) of ethylene bisstearylamide were added thereto and the resulting mixture was pelletized by means of an extruder at 200° C.

(c) Tests

The fluidity in processing was measured by means of a Koka type flow tester (nozzle 1 mm diameter x 2 mm, load 30 kg/cm$^2$).

The Izod impact strength was measured by the method of ASTM D-256 at 23°C on a test piece moulded by means of a 5 ounce (142 g) injection machine at 220° C.

The lifting property was measured by the following method on a test piece of dimensions 55 mm x 80 mm x 1.6 mm, moulded by means of a 1 ounce (28 g) injection machine at 220° C. The test piece was coated with a urethane coating (Ureol No. 600, produced by Kawakami Paint) by blowing; it was then dipped in gasoline and the time was measured until the urethane coating film was swollen and peeled. The longer this time, the better is the "lifting property".

The test of resistance to fluorocarbon gases was carried out by the following method on a test piece of dimensions 40 mm x 200 mm x 2 mm, moulded by means of a press-moulding machine at 210° C. The test piece was fixed on a semicircular strain-imparting means having an outer diameter of 130 mm at 23°C, which was placed in a glass desiccator having an internal capacity of 10 litres and containing Freon (trade mark) R-11, a liquid, at the bottom. The desiccator was sealed and then placed in a thermostatic chamber adjusted to 50° C, where it was allowed to stand for 1 hour. The desiccator was then taken out of the thermostatic chamber and allowed to stand at 23°C for 2 hours. Finally, the desiccator was placed in a thermostatic chamber adjusted to -30°C, where it was allowed to stand for 120 hours. A dumbbell, as defined in ASTM D-1822, was longitudinally cut from the test piece treated as described above, by means of a clicker blade. The tensile impact strength was measured on this dumbbell according to the method of ASTM D-1822.

The physical properties tested as described above are reported in Table 1.

EXAMPLE 2

Polymerisation and compounding were carried out in the same manner as in Example 1, except that the amounts of styrene and acrylonitrile employed in the graft polymerisation were changed to the values shown in Table 1. The composition of the graft polymer and the physical properties of the resulting resin composition are also shown in Table 1.

COMPARATIVE EXAMPLES 1 TO 4

Polymerisation and compounding were carried out in the same manner as in Example 1, except that the amounts of styrene and acrylonitrile in the graft polymerisation were changed to the values shown in Table 1. The compositions of the resulting graft polymers and the physical properties of the resin compositions prepared from them are also shown in Table 1.

In Comparative Example 1, the acrylonitrile content of the monomer mixture employed in the first step of the process is outside the scope of the present invention. In Comparative Example 2, the amount of monomers polymerised in the first step is outside the scope of this invention. In Comparative Examples 3 and 4, the acrylonitrile content of the part of the polymer formed by polymerisation is outside the scope of this invention.

From the results shown in Table 1, it can be seen that, where the acrylonitrile content of the monomer mixture in the first step is outside the scope of the invention (as in Comparative Example 1) or the amount of monomer mixture charged in the first step is outside the scope of the invention (as in Comparative Example 2), the lifting property and resistance to fluorocarbon gases are adversely affected. Also, where the acrylonitrile content of the part of the polymer formed by polymerisation in the process of the invention is too high (as in Comparative Example 3), the fluidity deteriorates, whereas, if it is too low (as in Comparative Example 4), the coating film is not satisfactory and hence such acrylonitrile contents are not desirable.

Table 1

| | Example 1 | Example 2 | Comparative Example 1 | Comparative Example 2 | Comparative Example 3 | Comparative Example 4 |
|---|---|---|---|---|---|---|
| Amount of rubber latex (as solids) (parts) | 40 | 40 | 40 | 40 | 40 | 40 |
| Total amount of styrene (parts) | 40 | 40 | 40 | 40 | 33 | 45 |
| Total amount of acrylonitrile (parts) | 20 | 20 | 20 | 20 | 27 | 15 |
| [First step polymerization] | | | | | | |
|   Amount of styrene (parts) | 18 | 20 | 13.3 | 9 | 17 | 20 |
|   Amount of acrylonitrile (parts) | 2 | 0 | 6.7 | 1 | 3 | 0 |
|   Acrylonitrile content in charged monomer mixture (%) | 10 | 0 | 33.5 | 10 | 15 | 0 |
| [Second step polymerization] | | | | | | |
|   Amount of styrene (parts) | 22 | 20 | 26.7 | 31 | 16 | 25 |
|   Amount of acrylonitrile (parts) | 18 | 20 | 13.3 | 19 | 24 | 15 |
|   Acrylonitrile content in charged monomer mixture (%) | 45 | 50 | 33.3 | 38 | 60 | 38 |
| Acrylonitrile content of polymer part formed by polymerization (%) | 31 | 30 | 31 | 31 | 40 | 23 |

Table 1 (Cont'd)

Methods for measuring physical properties were those shown in Example 1. Evaluated resin was a blend of the graft polymer and AS resin shown in Example 1 in such a proportion that the amount of rubber became 24% based on the weight of the blend.

| Physical properties | | | | | | |
|---|---|---|---|---|---|---|
| Izod impact strength, notched; (Kg·cm/cm) | 35 | 37 | 29 | 40 | 30 | 20 |
| Fluidity (x 10$^{-3}$ cm$^3$/sec) | 17 | 16 | 13 | 14 | 8 | 25 |
| Lifting property (time taken for coating film to be swollen and peeled) (minutes) | 180 | 190 | 90 | 100 | 170 | Coating film was not satisfactory |
| Fluorocarbon gas resistance Tensile impact strength (Kg·cm/cm2) | | | | | | |
| Before treatment | 65 | 70 | 60 | 70 | 60 | 45 |
| After treatment | 45 | 50 | 10 | 20 | 40 | 20 |

The following substances were charged into the same reactor as was employed in Example 1:

| | |
|---|---|
| Latex A (as solids) | 9.6 parts |
| Polybutadiene latex (as solids) (Product of Japan Synthetic Rubber Co. Ltd., JSR 0700) | 14.4 parts |
| Styrene | 22 parts |

(continued)

| | |
|---|---|
| Acrylonitrile | 4 parts |
| Disproportionated potassium rosinate | 1.5 parts |
| t-Dodecyl mercaptan | 0.03 part |
| Cumene hydroperoxide | 0.10 part |
| Dextrose | 0.35 part |
| Sodium pyrophosphate | 0.30 part |
| Ferrous sulphate | 0.01 part |
| Ion exchanged water | 150 parts |

The air in the reactor was then replaced by nitrogen and the mixture was heated and subjected to graft polymerisation at 70 C for 1 hour. The following mixture was then continuously added to the mixture in the reactor over a period of 2 hours:

| | |
|---|---|
| Styrene | 28 parts |
| Acrylonitrile | 22 parts |
| Cumene hydroperoxide | 0.18 part |
| t-Dodecyl mercaptan | 0.25 part |

After the addition was complete, the reaction was continued for a further 1 hour, with stirring, at 70 C. 1.0 part of 2,6-di-t-butyl-p-cresol (as an aging retardant) was then added to the resulting graft polymer latex. The product was then subjected to the same treatment as in Example 1, to recover the graft polymer. The acrylonitrile content of the part of the polymer formed by polymerisation was 31%. To this graft polymer were added 2 parts (per 100 of polymer) of ethylene bisstearylamide. The resulting mixture was pelletized by means of an extruder at 200 C and its physical properties were measured. The results obtained are shown in Table 2.

COMPARATIVE EXAMPLE 5

Polymerisation was carried out in the same manner as described in Example 3, except that the amounts of styrene and acrylonitrile were changed to the values reported in Table 2, so that the acrylonitrile content of the monomer mixture charged in the first step was 34.6%, which is outside the scope of the present invention. The composition of the monomers and the physical properties of the resin obtained are shown in Table 2.

EXAMPLE 4

The first step of the graft polymerisation reaction was carried out as described in Example 3, but thereafter mixtures (A) and (B) were added in that order over a period of 1 hour:

| Mixture (A): | |
|---|---|
| Styrene | 15 parts |
| Acrylonitrile | 10 parts |
| Cumene hydroperoxide | 0.09 part |
| t-Dodecyl mercaptan | 0.10 part |

| Mixture (B): | |
|---|---|
| Styrene | 13 parts |
| Acrylonitrile | 12 parts |
| Cumene hydroperoxide | 0.09 part |
| t-Dodecyl mercaptan | 0.15 part |

The reaction was continued for a further 1 hour at 70 C after the addition was complete. The other procedures and conditions were as in Example 3. The physical properties of the resin obtained are shown in Table 2.

## EXAMPLE 5

The first step of the graft polymerisation reaction was carried out as described in Example 3, but thereafter, the following mixture was added continuously over a period of 2 hours:

| Styrene | 23 parts |
|---|---|
| Acrylonitrile | 22 parts |
| Cumene hydroperoxide | 0.18 part |
| t-Dodecyl mercaptan | 0.25 part |

A mixture of 5 parts of styrene and 0.05 part of cumene hydroperoxide was then added and the reaction was continued for a further 1 hour at 70° C, with stirring.

The other procedures and conditions were as described in Example 3. The physical properties of the resin obtained are shown in Table 2. This Example demonstrates that the distribution of styrene and acrylonitrile in the polymerisation reactions of the second and any subsequent steps is not critical, provided that the acrylonitrile content of the monomer composition is within the scope of the invention.

## EXAMPLE 6

The procedure described in Example 3 was repeated, except that the whole of the styrene employed in Example 3 was replaced by p-methylstyrene. The physical properties of the product are shown in Table 2.

## EXAMPLE 7

The procedure described in Example 3 was repeated, except that vinyltoluene (a mixture of the ortho, meta and para isomers) was used in place of the whole of the styrene employed in Example 3. The physical properties of the resulting resin are shown in Table 2.

## EXAMPLE 8

The following substances were charged into the same reactor as was employed in Example 1:

| Latex A (as solids) | 16 parts |
|---|---|
| Polybutadiene latex (as solids) (Product of Japan Synthetic Rubber Co. Ltd., JSR 0700) | 24 parts |
| Styrene | 25.5 parts |
| Acrylonitrile | 4.5 parts |
| Disproportionated potassium rosinate | 1.0 part |
| Terpinolene | 0.03 part |
| Cumene hydroperoxide | 0.15 part |
| Dextrose | 0.35 part |
| Sodium pyrophosphate | 0.30 part |
| Ferrous sulphate | 0.01 part |
| Ion exchanged water | 150 parts |

The air in the reactor was then replaced by nitrogen and the resulting mixture was heated and subjected to graft polymerisation at 70°C for 1 hour. The following mixture was then continuously added thereto over a period of 2 hours:

| Styrene | 15 parts |
|---|---|
| Acrylonitrile | 15 parts |
| Cumene hydroperoxide | 0.15 part |
| Terpinolene | 0.15 part |

After completion of the addition, the reaction was continued for a further 1 hour at 70°C, with stirring. The resulting graft polymer latex was then treated in the same manner as described in Example 1, to recover the graft polymer. The acrylonitrile content of the part of the polymer formed by polymerisation in the process of the invention was 30%.

The graft polymer was blended with the same AS resin as was employed in Example 1, in such an amount that the amount of rubbery polymer in the blend was 24%. The physical properties of the blend were measured and the results obtained are shown in Table 2.

Table 2

| | Example 3 | Comparative Example 5 | Example 4 | Example 5 | Example 6 | Example 7 | Example 8 |
|---|---|---|---|---|---|---|---|
| Amount of rubber latex (as solids) (parts) | 24 | 24 | 24 | 24 | 24 | 24 | 40 |
| Total amount of styrene (parts) | 50 | 50 | 50 | 50 | 50 *1 | 50 *2 | 40.5 |
| Total amount of acrylonitrile (parts) | 26 | 26 | 26 | 26 | 26 | 26 | 19.5 |
| [First step polymerization] | | | | | | | |
| Amount of styrene (parts) | 22 | 17 | 22 | 22 | 22 *1 | 22 *2 | 25.5 |
| Amount of acrylonitrile (parts) | 4 | 9 | 4 | 4 | 4 | 4 | 4.5 |
| Acrylonitrile content in charged monomer mixture (%) | 15.4 | 34.6 | 15.4 | 15.4 | 15.4 | 15.4 | 15 |
| [Second step polymerization] | | | | | | | |
| Amount of styrene (parts) | 28 | 33 | (Second step) 15 (Third step) 13 | (Second step) 23 (Third step) 5 | 28 *1 | 28 *2 | 15 |

- Cont'd -

Table 2 (Cont'd)

| | | | | | | | | | |
|---|---|---|---|---|---|---|---|---|---|
| Amount of acrylonitrile (parts) | 22 | 17 | 10 | 12 | 22 | 0 | 22 | 22 | 15 |
| Acrylonitrile content in charged monomer mixture (%) | 44 | 34 | 40 | 48 | 48.9 | 0 | 44 | 44 | 50 |
| Acrylonitrile content of polymer part formed by polymerization (%) | 31 | 31 | 31 | | 31 | | 31 | 31 | 30 |
| Physical properties | Methods for measuring physical properties were those shown in Example 1. | | | | | | | | |
| | Resin evaluated was graft polymer itself. | | | | | | | | *3 |
| Izod impact strength, notched (Kg·cm/cm) | 33 | 28 | 35 | | 32 | | 32 | 31 | 33 |
| Fluidity (x $10^{-3}$ cm$^3$/sec) | 15 | 10 | 13 | | 17 | | 16 | 15 | 15 |
| Lifting property (time taken for coating film to be swollen and peeled) (minutes) | 170 | 80 | 175 | | 165 | | 178 | 181 | 170 |
| Fluorocarbon gas resistance Tensile impact strength (Kg·cm/cm$^2$) | | | | | | | | | |
| Before treatment | 60 | 55 | 65 | | 60 | | 60 | 62 | 65 |
| After treatment | 45 | 15 | 45 | | 45 | | 45 | 46 | 40 |

Note:   *1: p-methylstyrene   *2: vinyltoluene   *3:   Resin evaluated was the blend.

EP 0 104 899 B2

EP 0 104 899 B2

EXAMPLES 9 AND 10 AND COMPARATIVE EXAMPLE 6

(a) Production of polyphenylene ether resin

A stainless steel reactor was thorougly purged with nitrogen. 53.6 g of cupric bromide and 1 110 g of dibutylamine were added to the reactor, followed by a solution of 8.75 kg of 2,6-xylenol in 40 litres of toluene. The resulting mixture was stirred to form a uniform solution, and polymerisation was conducted at 30 °C for 2 hours, while blowing oxygen at a high rate into the reactor. After termination of the polymerisation, ethanol was gradually added, whilst vigorously stirring the polymer solution phase, to form a slurry, which was filtered and the product dried to give a polymer (hereinafter abbreviated as "PPE").

(b) Blend with polyphenylene ether resin

The thermoplastic resin obtained as described in Example 1 or 2 or Comparative Example 1 was blended with an AS resin and with PPE, and the properties of the blend thus obtained were measured, giving the results shown in Table 3.

13

Table 3

| Example No. | Blending ratio (part) | | | | Rubber amount (%) | Evaluation results | | |
|---|---|---|---|---|---|---|---|---|
| | PPE | Thermoplastic resin | | Styrene resin AS resin* | | Impact strength (kg·cm/cm) | Heat deformation temperature (°C) | |
| | | Kind | Amount | | | | | |
| 9 | 40 | Ex. 1 | 45 | 15 | 18 | 32 | 136 | |
| 10 | 40 | Ex. 2 | 45 | 15 | 18 | 30 | 136 | |
| Comp. Ex. 6 | 40 | Comp. Ex. 1 | 45 | 15 | 18 | 6 | 93 | |

EP 0 104 899 B2

Table 3 (Cont'd)

| | Solvent resistance | | Appearance of coating |
|---|---|---|---|
| Surface gloss of molded article | Appearance | Swelling (%) | |
| ◎ | ◎ | 5 | ◎ |
| ◎ | ◎ | 5 | ◎ |
| x | x | 7 | x |

Note: * AS resin: acrylonitrile-styrene copolymer having an acrylonitrile content of 31% by weight.

Evaluation methods

(1) Impact strength: a notched sample having a thickness of 0.6 cm (0.25 inch) was measured according to ASTM D-256.

(2) Heat deformation temperature: a moulded article was annealed at 110°C C for 2 hours, and a sample having a thickness of 0.6 cm (0.25 inch) was obtained therefrom; its heat deformation temperature was measured at a pressure of 18.6 kg/cm$^2$ (264 psi), according to ASTM D-648.

(3) Surface gloss of moulded article: this was evaluated visually, based on the following ratings:

◎: Very good,
o: Good,
Δ: Slightly inferior,
x: Bad.

(4) Appearance of coating: cracks, crazes, the suction state and the appearance of the surface of the coating were visually evaluated after coating, using the following ratings:

◎ :   Very good,
o:    Good,
Δ:    Slightly inferior,
x:    Bad.

(5) Solvent resistance: the same sample as was used for measurement of the heat deformation temperature was immersed in gasoline for 5 hours, after which the cracks which formed and the degree of swelling were measured. The cracks formed were visually evaluated using the following ratings:

◎ :   Very good,
o:    Good,
Δ:    Slightly bad,
x:    Bad
          and the degree of swelling was determined from the following equation:

$$\text{Swelling degree (\%)} = \frac{\text{(Weight after immersion for 5 hours) - (Weight before immersion)}}{\text{Weight before immersion}} \times 100$$

<u>EXAMPLES</u> <u>11</u> <u>TO</u> <u>15</u> <u>AND</u> <u>COMPARATIVE</u> <u>EXAMPLE</u> <u>7</u>

The thermoplastic resin obtained as described in Example 1, an AS resin having an acrylonitrile content of 32% and a polycarbonate resin (FN 2200 produced by Idemitsu Petrochemical Co. Ltd.) were mixed in the proportions shown in Table 4 to give compositions (except for Comparative Example 7, where the polycarbonate resin alone was used); the physical properties of the compositions were measured and the results obtained are shown in Table 4.

## Table 4

| | Example | | | | | Comparative Example 7 |
|---|---|---|---|---|---|---|
| | 11 | 12 | 13 | 14 | 15 | |
| Amount of graft polymer of Example 1 (part) | 30 | 30 | 30 | 30 | 30 | 0 |
| Amount of AS resin (part) | 40 | 30 | 20 | 10 | 0 | 0 |
| Amount of polycarbonate resin (part) | 30 | 40 | 50 | 60 | 70 | 100 |
| Izod impact strength (kg·cm/cm) | 19 | 28 | 50 | 58 | 63 | 15 |
| Fluidity (x $10^{-3}$ cm³/sec) | 52 | 40 | 33 | 20 | 15 | 2 |
| Heat deformation temperature (°C) | 100 | 103 | 106 | 110 | 118 | 134 |
| Lifting property (time taken for sample to be swollen and peeled) (minutes) | 120 | 100 | 110 | 100 | 70 | 5 |
| Appearance of coating* | ◎ | ◎ | ◎ | ◎ | o | x |

Note:  *: Same as in item (4) in the Evaluation methods for Table 3.

EP 0 104 899 B2

# EP 0 104 899 B2

## Claims

1. A process for producing a thermoplastic resin by polymerising a monomer mixture of an ethylenically unsaturated nitrile monomer and an alkenyl aromatic monomer in the presence of a rubbery polymer latex, selected from the group consisting of polybutadiene, acrylonitrile-butadiene copolymers, styrene-butadiene copolymers, isoprene rubber, chloroprene rubber, and ethylene-propylene-diene rubbers, characterised in that (i) the monomer mixture essentially consists, as the only copolymerisable monomers, of the two said monomers and (ii) the polymerisation is effected in at least two steps:

   (a) a first step or steps in which in total from 30 to 70% by weight of the whole monomer mixture is polymerised, the unsaturated nitrile monomer content of the mixture in this step or in each of these steps being from 0 to 18% by weight; and

   (b) a subsequent step or steps in which the remainder of the monomer mixture is polymerised, the overall unsaturated nitrile monomer content of the mixtures in this step or steps being from 35 to 90% by weight, and the content of unsaturated nitrile monomer units in the polymer part formed by polymerisation in steps (a) and (b) being from 28 to 38% by weight.

2. A process according to claim 1, in which said rubbery polymer is polybutadiene, styrene-butadiene copolymer or a mixture thereof.

3. A process according to any one of claims 1 to 2, in which said unsaturated nitrile monomer is acrylonitrile or methacrylonitrile.

4. A process according to any one of claims 1 to 3, in which said alkenyl aromatic monomer is an alkenyl aromatic hydrocarbon monomer, or substituted aromatic hydrocarbon monomer.

5. A process according to claim 4, in which said aromatic hydrocarbon monomer is substituted with a halogen atom and/or an alkoxy group.

6. A process according to any one of claims 1 to 3, in which said alkenyl aromatic monomer is styrene, $\alpha$-methylstyrene, chlorostyrene, bromostyrene, vinyl-naphthalene or an alkoxystyrene.

7. A process according to any one of claims 1 to 6, in which the monomer mixture is polymerised by an emulsion polymerisation process.

8. A process according to any one of Claims 1 to 7, in which the amount of the whole monomer mixture is from 95 to 40 parts by weight and the amount of rubbery polymer latex (as solids) is from 5 to 60 parts by weight (the total of said whole monomer mixture and said rubbery polymer latex, as solids, being 100 parts).

9. A process according to Claim 8, in which the amount of said whole monomer mixture is from 80 to 40 parts by weight and the amount of said rubbery polymer latex, as solids, is from 20 to 60 parts by weight.

10. A process according to any one of Claims 1 to 9, in which the whole monomer mixture consists of from 25 to 40% by weight of said unsaturated nitrile monomer and from 75 to 60% by weight of said alkenyl aromatic monomer.

11. A process according to any one of claims 1 to 10, in which the monomer in step (a) is employed in an amount of from 30 to 60% by weight of the whole monomer mixture.

12. A process according to claim 11, in which the remainder of the monomer mixture in step (b) contains from 40 to 70% by weight of said unsaturated nitrile monomer.

## Patentansprüche

1. Verfahren zur Herstellung eines thermoplastischen Harzes durch Polymerisation eines Monomerengemischs aus einem ethylenisch ungesättigten Nitrilmonomer und einem alkenylaromatischen Monomer in Gegenwart eines Kautschukpolymer-Latex, wobei das Kautschukpolymer unter Polybutadien, Acrylnitril-Butadien-Copolymeren, Styrol-Butadien-Copolymeren, Isopren-Kautschuk, Chloropren-Kautschuk, und Ethylen-Propylen-Kautschuken ausgewählt wird,
dadurch gekennzeichnet, daß

(i) das Monomerengemisch im wesentlichen aus diesen beiden Monomeren als den einzigen copolymerisierbaren Monomeren besteht und daß

(ii) die Polymerisation in mindestens zwei Schritten durchgeführt wird:

(a) einem ersten Schritt oder Schritten, in dem/denen insgesamt 30 bis 70 Gew.-% des gesamten Monomerengemischs polymerisiert werden, wobei der Gehalt des Gemischs an ungesättigtem Nitrilmonomer in diesem Schritt oder in jedem dieser Schritte 1 bis 18 Gew.-% beträgt, und

(b) einem nachfolgenden Schritt oder Schritten, in dem/denen das restliche Monomerengemisch polymerisiert wird, wobei der Gesamtgehalt der Gemische in diesem Schritt oder diesen Schritten an ungesättigtem Nitrilmonomer 35 bis 90 Gew.-% beträgt und der Gehalt an Einheiten aus ungesättigtem Nitrilmonomer in dem Polymerteil, der durch die Polymerisation in den Schritten (a) und (b) gebildet wird, 28 bis 38 Gew.-% beträgt.

2. Verfahren nach Anspruch 1, wobei das Kautschukpolymer ein Polybutadien, ein Styrol-Butadien-Copolymer oder ein Gemisch davon ist.

3. Verfahren nach einem der Ansprüche 1 und 2, wobei das ungesättigte Nitrilmonomer aus Acrylnitril oder Methacrylnitril besteht.

4. Verfahren nach einem der Ansprüche 1 bis 3, wobei das alkenylaromatische Monomer ein alkenylaromatisches kohlenwasserstoffmonomer oder ein substituiertes aromatisches Kohlenwasserstoffmonomer ist.

5. Verfahren nach Anspruch 4, wobei das aromatische Kohlenwasserstoffmonomer mit einem Halogenatom und/oder einer Alkoxygruppe substituiert ist.

6. Verfahren nach einem der Ansprüche 1 bis 3, wobei das alkenylaromatische Monomer Styrol, $\alpha$-Methylstyrol, Chlorstyrol, Bromstyrol, Vinylnaphthalin oder ein Alkoxystyrol ist.

7. Verfahren nach einem der Ansprüche 1 bis 6, wobei das Monomerengemisch unter Anwendung eines Emulsionspolymerisationsverfahrens polymerisiert wird.

8. Verfahren nach einem der Ansprüche 1 bis 7, wobei die Menge des gesamten Monomerengemischs 95 bis 40 Gewichtsteile und die Menge des Kautschukpolymer-Latex (als Feststoffe) 5 bis 60 Gewichtsteile beträgt wobei die Gesamtmenge aus dem gesamten Monomerengemischs und dem Kautschukpolymer-Latex, als Feststoffe, 100 Gewichtsteile beträgt).

9. Verfahren nach Anspruch 8, wobei die Menge des gesamten Monomerengemischs 80 bis 40 Gewichtsteile und die Menge des Kautschukpolymer-Latex, als Feststoffe, 20 bis 60 Gewichtsteile beträgt.

10. Verfahren nach einem der Ansprüche 1 bis 9, wobei das gesamte Monomerengemisch aus 25 bis 40 Gew.-% ungesättigtem Nitrilmonomer und 75 bis 60 Gew.-% alkenylaromatischem Monomer besteht.

11. Verfahren nach einem der Ansprüche 1 bis 10, wobei das Monomer in Schritt (a) in einer Menge von 30 bis 60 Gew.-%, bezogen auf das gesamte Monomerengemisch, eingesetzt wird.

12. Verfahren nach Anspruch 11, wobei das restliche Monomerengemisch in Schritt (b) 40 bis 70 Gew.-% des ungesättigten Nitrilmonomers enthält.

**Revendications**

1. Procédé pour la production d'une résine thermoplastique par polymérisation d'un mélange monomère d'un monomère nitrile éthyléniquement insaturé et d'un monomère aromatique alcènyle en présence d'un latex polymère caoutchouteux, choisi dans le groupe constitué de polybutadiène, de copolymères d'acrylonitrile et de butadiène, de copolymères de styrène et de butadiène, de caoutchouc d'isoprène, de caoutchouc de chloroprène, et de caoutchoucs d'éthylène-propylène-diène,
caractérisé en ce que (i) le mélange monomère consiste essentiellement, comme seules monomères copolymérisables, des deux dits monomères et (ii) la polymérisation est effectuée en au moins deux étapes;

> (a) une première étape ou série d'étapes dans laquelle au total de 30 à 70% en poids de l'ensemble du mélange monomère est polymérisé, la teneur en monomère nitrile insaturé du mélange dans cette étape ou dans chacune de ces étapes étant de 0 à 18% en poids; et
> (b) une étape ou série d'étapes subséquente dans laquelle le restant du mélange monomère est polymérisé, la teneur totale en monomère nitrile insaturé des mélanges dans cette étape ou série d'étapes étant de 35 à 90% en poids, et la teneur en unités de monomère nitrile insaturé dans la partie polymère formée par polymérisation dans les étapes (a) et (b) étant de 28 à 38% en poids.

2. Procédé selon la revendication 1, dans lequel ledit polymère caoutchouteux est un polybutadiène, un copolymère de styrène et de butadiène ou un mélange de ceux-ci.

3. Procédé selon l'une quelconque des revendications 1 à 2, dans lequel ledit monomère nitrile insaturé est l'acrylonitrile ou le méthacrylonitrile.

4. Procédé selon l'une quelconque des revendications 1 à 3, dans lequel ledit monomère aromatique alcènyle est un monomère d'hydrocarbure aromatique alcènyle, ou un monomère d'hydrocarbure aromatique substitué.

5. Procédé selon la revendication 4, dans lequel ledit monomère d'hydrocarbure aromatique est substitué par un atome d'halogène et/ou un groupement alcoxy.

6. Procédé selon l'une quelconque des revendications 1 à 3, dans lequel ledit monomère aromatique alcényle est le styrène, l'$\alpha$-methylstyrène, le chlorostyrène, le bromostyrène, le vinylnaphtalène ou un alcoxystyrène.

7. Procédé selon l'une quelconque des revendications 1 à 6, dans lequel le mélange monomère est polymérisé par un procédé de polymérisation en émulsion.

8. Procédé selon l'une quelconque des revendications 1 à 7, dans lequel la quantité du mélange monomère total est de 95 à 40 parties en poids et la quantité du latex polymère caoutchouteux (comme solides), est de 5 à 60 parties en poids (le total dudit mélange monomère total et dudit latex polymère caoutchouteux, sous forme de solides, étant de 100 parties).

9. Procédé selon la revendication 8, dans lequel la quantité dudit mélange monomère total est de 80 à 40 parties en poids et la quantité dudit latex polymère caoutchouteux, comme solides, est de 20 à 60 parties en poids.

10. Procédé selon l'une quelconque des revendications 1 a 9, dans lequel le mélange monomère total consiste de 25 a 40% en poids dudit monomère nitrile insaturé et de 75 a 60% en poids dudit monomère aromatique alcènyle.

11. Procédé selon l'une quelconque des revendications 1 à 10, dans lequel le monomère employé dans l'étape (a) est employé en une quantité de 30 à 60% en poids du mélange nonomère total.

12. Procédé selon la revendication 11, dans lequel le restant du mélange monomère dans l'étape (b) contient de 40 a 70% en poids dudit monomère nitrile insaturé.